# DEMANDE DE BREVET EUROPEEN

(11) **EP 1 325 676 A1**
(43) Date de publication de la demande: **09.07.2003**
(21) Numéro de dépôt: 02380072.5
(22) Date de dépôt: 03.04.2002
(51) Int. Cl.: A01B 1/16, E04H 12/22

(54) **Dispositif pivotant support de parasols et planteuses de bulbe à sols humides**

(30) Priorité: 28.12.2001 ES 200103151 U
(71) Demandeur: Viera Olivera, José, 28029 Madrid (ES)
(72) Inventeur: Viera Olivera, José, 28029 Madrid (ES)

(57) **Abrégé**

*Revendication principale* est la pièce numéro (**1**) car c'est un cylindre creux, *caractérisé* d'une *rainure latérale* fondamentale qui permet l'enfoncement au sol du dispositif sans plus élargir l'orifice d'entrée. Le bord supérieur est percé d'un orifice de 4 mm de diamètre pour donner passage à une goupille. Et le bord inférieur est garni de deux becs qui servent à faciliter la tâche de creuser.

La pièce numéro (**2**) s'assemble sur la (**1**) servant de poignée. La pièce numéro (**3**) est un crochet servant à dégager la terre extraite du dispositif. Celle-ci s'assemble comme un collier sur la pièce (**1**).

L'éxécution préférable consiste à prendre le dispositif par la poignée (**2**), le faire pivoter verticalement tout en le poussant légèrement, alors la terre commence à s'y introduire. Une fois plein de terre jusqu'à la rainure (**1**), on le ressort pour le dégager avec (**3**). Ensuite il est remis de la même façon pour l'enfoncer jusqu'a la poignée (**2**). Maintenant il est prêt à abriter efficacement le manchon de l'ombrelle qui se tient vertical et à l'hauteur désirée..

## Description

### BUT DE L'INVENTION

Pour permettre l'installation des *parasols à la plage* facilement et sûrement sans aucun effort suplémentaire, c'est la mission de ce dispositif ingénieux. Il est très pratique puisque non seuleument il sert à placer les parasols mais aussi il sert à *l'entretien des jardins*, car il se prête à enterrer dans des sols humides des graines, des bulbes et autres tubercules.

Son mécanisme inventif présente comme *caractéristique* ôter la terre par l'intérieur du dispositif même. Ceci permet de creuser sur le terrain humide à la mesure des objets qu'on voudrait y introduire.

### PRÉCÉDENTS DE L'INVENTION

Il y a plusieurs dispositifs qui permettent fixer des parasols mais ils sont lourds à transporter ou trop grand pour les déplacer, comme les supports troncs-pyramidales ou d'autres socles similaires chargées de matériaux divers pour faire contrepoids.

Il y en a d'autres qui sont coniques, moins lourds et plus petits, à pointes hélicoïdales, qui prétendent allonger le parasol pour l'aider à pénétrer dans le sol. Mais ceux-ci ne peuvent pas enlever la terre par l'intérieur du conduit puisqu'ils sont fermés et par conséquent ils ne se prêtent pas à faire de gaine ou étui.

### DESCRIPTION DE L'INVENTION

Le dispositif a une forme tubulaire arrondie et vide d'un bord à l'autre. Le bord inférieur est garni de deux becs pour mieux commencer à creuser dans les sols humides. En pivotant dans un sens et dans l'autre le dispositif s'enfonce en même temps qu'il extrait la terre humide par l'intérieur du conduit grâce à une *rainure latéral fondamentale* qui le permet. Lorsque la terre a rempli la *rainure qu'on revendique,* on le retire dehors pour le désobstruer à l'aide de la main ou du crochet qui lui sert de collier.

Ensuite il est replacé dans le trou creusé. À nouveau enfoncé légèrement de la même manière il reste ainsi bien figé. Après, sans effort, le parasol rentre et s'acommode dans le dispositif jusqu'au fond en se dressant bien droit et sûr. On peut aussi le graduer verticalement grâce à une goupille qui se visse sur le bord supérieur du dispositif.

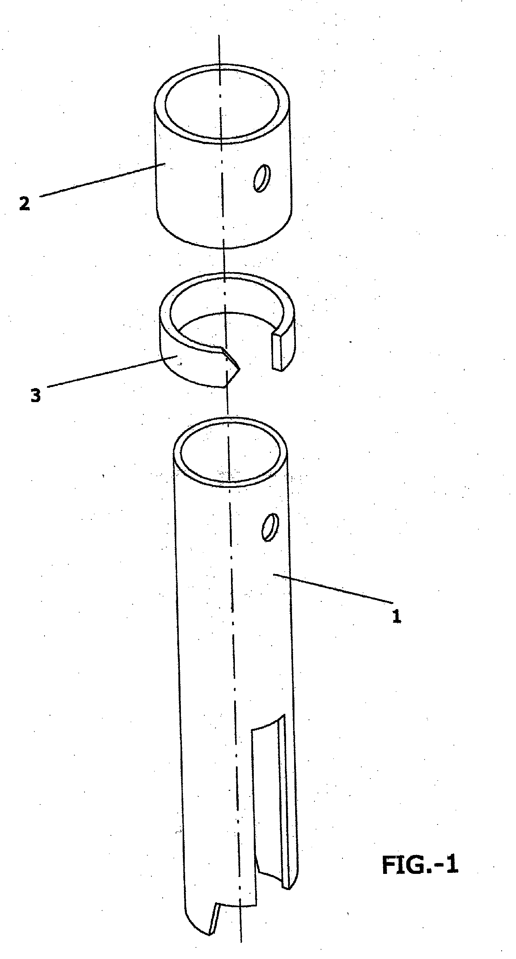

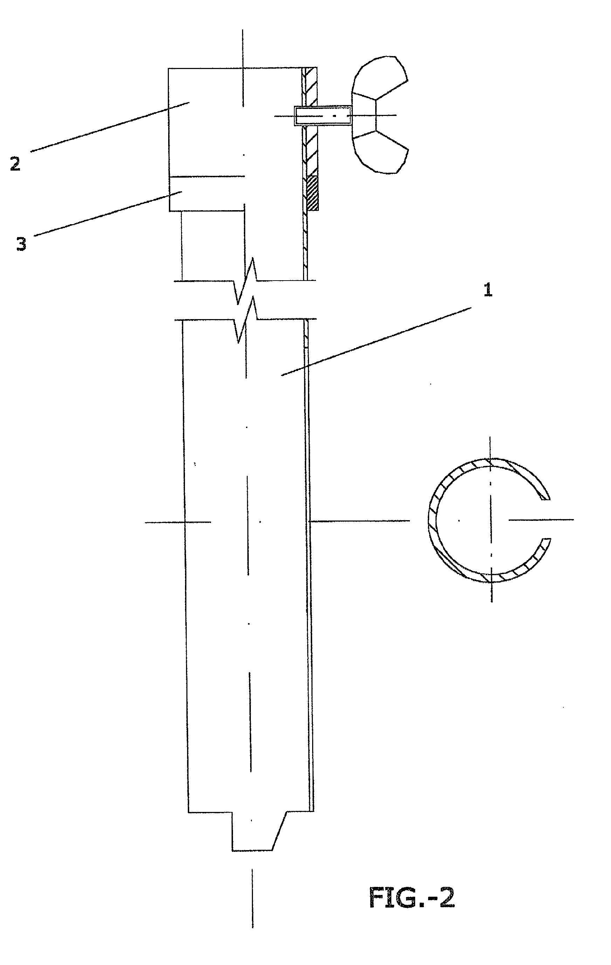

## Revendications

1. *La revendication principale* est la pièce numéro (1) du dessin. C'est une forme cylindrique creuse, *caractérisé* d' une *rainure latérale essentielle* qui permet ramasser la terre par l'intérieur du dispositif sans plus élargir l'orifice d'entrée. En enfonçant le dispositif d'une manière pivotante la terre est renvoyée par dedans jusqu'à remplir le haut de *la rainure que nous revendicons,* à ce moment le dispositif est retiré du trou avec la terre prise. Après nous dégageons le dispositif de la terre ainsi enlevée et ensuite on le remet dans le trou si on souhaite l'agrandir de la même façon.
Une fois fait le trou désiré au sol, et sans plus d'effort, nous plantons les bulbes ou autres graines dedans au cas des besognes jardinières.
Ou bien, sans retirer le dispositif, nous y plaçons, par exemple, les bâtons ou manchons servant à soutenir les parasols, qui s'y introduisent jusqu'au fond du dispositif qui les immobilise bien rigides et sûrs comme une gaine solide.
